# EUROPÄISCHE PATENTSCHRIFT

(11) **EP 3 006 748 B1**
(45) Veröffentlichungstag und Bekanntmachung des Hinweises auf die Patenterteilung: **07.11.2018**
(21) Anmeldenummer: 15185674.7
(22) Anmeldetag: 17.09.2015
(51) Int. Cl.: F16B 25/00, F16B 25/10

(54) **BOHRSCHRAUBE**
DRILL BIT
VIS AUTOTARAUDEUSE

(30) Priorität: 09.10.2014 DE 102014114701
(43) Veröffentlichungstag der Anmeldung: 13.04.2016
(73) Patentinhaber: Berner Trading Holding GmbH, 74653 Künzelsau (DE)
(72) Erfinder: Runge, Erich, 74653 Künzelsau (DE); Lebsack, Boris, 74670 Forchtenberg (DE)
(74) Vertreter: Prinz & Partner mbB

(56) Entgegenhaltungen:
- DE-A1-102006 026 176
- DE-U1- 8 612 951
- DE-U1-202013 007 144
- GB-A- 2 127 927
- US-A- 3 199 381
- US-A1- 2002 090 278
- US-A1- 2006 083 595
- US-A1- 2014 010 618

## Beschreibung

Die Erfindung betrifft eine Bohrschraube gemäß dem Oberbegriff des Anspruches 1.

Als Bohrschraube wird hier eine Schraube bezeichnet, die ohne Vorbohren in einen Untergrund wie Holz, Kunststoff, Gipskarton etc. eingeschraubt werden kann. Solche Schrauben werden auch als selbstschneidende Schrauben bezeichnet.

Aus dem Stand der Technik sind Bohrschrauben in den verschiedensten Ausgestaltungen bekannt. Neben der Halte- oder Auszugskraft, die immer möglichst hoch sein soll, ist ein weiterer wichtiger Parameter das Einschraubverhalten zu Beginn des Schraubvorgangs, also wenn das Gewinde auf dem Schraubenschaft noch nicht oder noch nicht richtig greift. Angestrebt wird, dass die Schraube beim Einschrauben auch in harten Materialien schnell greift, so dass der Benutzer keine große Andruckkraft aufbringen muss.

Die DE 10 2006 026 176 A1 und die US 2014/0010618 A1 offenbaren eine selbstbohrende Schraube mit einem Schraubenkopf und einem Schaft, der einen Bohrabschnitt aufweist. Der Bohrabschnitt ist mit einer Schneide versehen, die sich über den gesamten Durchmesser des Schaftes erstreckt. Zudem weist der Bohrabschnitt eine Zentrierspitze auf.

Die Aufgabe der Erfindung besteht darin, eine Bohrschraube zu schaffen, die sich durch ein gutes Einschraubverhalten auszeichnet.

Zur Lösung dieser Aufgabe sind erfindungsgemäß bei einer Bohrschraube der eingangs genannten Art die Merkmale des kennzeichnenden Teils des Anspruches 1 vorgesehen. Die Zentrierspitze gewährleistet, dass die Bohrschraube zu Beginn des Einschraubens nicht seitlich wandert. Der Bohrabschnitt sorgt für einen spanenden Materialabtrag in dem Untergrund, in den die Bohrschraube eingeschraubt wird. Bei einigen selbstschneidenden Schrauben aus dem Stand der Technik verdrängt die Schraubenspitze das Material des Untergrunds im wesentlichen seitlich, so dass ein Hohlraum erzeugt wird, in den die Schraube eingedrückt wird, bis schließlich das Gewinde des Schafts greift und die Schraube weiter vorwärtszieht. Der Bohrabschnitt bohrt im Untergrund ein Loch, was es der Bohrschraube erleichtert, so weit in den Untergrund einzudringen, dass schließlich das Gewinde des Schafts greift. Dies wird durch die Gewindegangabschnitte am Bohrabschnitt erleichtet, die bereits sehr früh eine Vortriebskraft erzeugen. Die Spannut erhöht die Wirksamkeit der Schneide und erleichtert das Abführen von Spänen, die die Schneide beim Eindrehen in den Untergrund aus dessen Material herausgeschnitten hat. Dadurch, dass sich die Schneide nur auf einer Seite der Mittelachse befindet, wird gewährleistet, dass ein großer Teil der Andruckkraft zu Beginn des Einschraubens als Kontaktkraft zwischen der Schneide und dem Untergrund zur Verfügung steht, so dass die Schneide eine hohe Wirksamkeit hat.

Gemäß einer bevorzugten Ausführungsform ist vorgesehen, dass die Schneide sich in einem Winkel zwischen 70° und 110° relativ zur Mittelachse der Bohrschraube erstreckt, vorzugsweise in einem Winkel von etwa 90°. Diese Ausrichtung der Schneide im weitesten Sinne quer zur Mittelachse der Bohrschraube hat sich als am effektivsten herausgestellt.

Vorzugsweise ist auf der von der Schneide abgewandten Seite der Mittelachse eine Führungsrippe angeordnet. Die Führungsrippe stellt beim Einschrauben eine Führungskraft bereit, die die Zentrierwirkung der Zentrierspitze verstärkt. Somit wird gewährleistet, dass die Schneide ein sauberes Loch bohrt und die Bohrschraube dabei nicht seitlich wandert, auch wenn die Schneide vollständig exzentrisch angeordnet ist, wie dies gemäß der bevorzugten Ausführungsform vorgesehen ist.

Es kann vorgesehen sein, dass die Führungsrippe, in axialer Richtung betrachtet, etwa auf dem Niveau der Schneide endet. Dies ist hinsichtlich der Wirksamkeit optimal.

Vorzugsweise ist vorgesehen, dass der Bohrabschnitt einen allgemein rechteckigen Querschnitt hat, insbesondere seine Dicke mehr als doppelt so groß ist wie seine Breite. Dies gewährleistet, dass entlang der breiten Seitenflächen des Bohrabschnitts ein ausreichend großer Freiraum zur Verfügung steht, um die von der Schneide erzeugten Späne aus der erzeugten Bohrung abzuführen.

Vorzugsweise sind die Gewindegangabschnitte hinsichtlich Abstand voneinander und Steigung als Fortsetzung des Gewindes des Schafts ausgeführt. Die Gewindegangabschnitte wirken dann wie ein Gewindeschneider, der im Untergrund einen Gang für das Gewinde des Schafts der Bohrschraube vorschneidet.

Gemäß einer bevorzugten Ausführungsform ist vorgesehen, dass der Querschnitt des Bohrabschnitts sich ausgehend von der Zentrierspitze zum Schaft hin vergrößert. Dies erhöht die Querstabilität des Bohrabschnittes.

Vorzugsweise ist vorgesehen, dass der Bohrabschnitt, im Querschnitt betrachtet, zwei gegeneinander versetzte Bereiche aufweist, die einander in der Mitte so überlappen, dass ein verdickter Mittelabschnitt gebildet ist. Dieser verdickte Mittelabschnitt erhöht die Stabilität des Bohrabschnittes weiter.

Gemäß einer Ausführungsform ist vorgesehen, dass das Gewinde einen einzigen Gang aufweist. Dies hat sich hinsichtlich der Kombination aus Einschraubkraft und Haltekraft als vorteilhaft bei einer Vielzahl von Untergründen herausgestellt. Grundsätzlich kann das Gewinde auch mehrgängig ausgeführt sein.

Vorzugsweise ist der Bohrabschnitt aus einem plastisch verformten Materialabschnitt gebildet, insbesondere aus einem geprägten Materialabschnitt. Dieses Herstellungsverfahren führt zu geringen Herstellungskosten bei gleichzeitig hoher Präzision der Geometrie des Bohrabschnittes und der Zentrierspitze. Außerdem ist die sich beim Umformen ergebende Kaltverfestigung des Materials vorteilhaft für die Festigkeit.

Gemäß einer Ausgestaltung der Erfindung ist vorgesehen, dass die Zentrierspitze zwei einander gegenüberliegende Flanken aufweist, die in den Bohrabschnitt übergehen. Anders ausgedrückt gibt es keinen Dickensprung beim Übergang von der Zentrierspitze in den Bohrabschnitt. Dies erleichtet das Eindringen des Bohrabschnittes in den Untergrund.

Gemäß einer Ausgestaltung der Erfindung ist vorgesehen, dass das Gewinde gerollt ist. Auch dies führt zu geringen Herstellungskosten.

Weiterhin kann vorgesehen sein, dass der Schaft mit Reibrippen versehen ist. Die Reibrippen erhöhen den Widerstand der Bohrschraube im eingeschraubten Zustand gegen ein selbsttätiges Lösen.

Weiterhin können am Schraubenkopf mehrere Anti-Rückdreh-Taschen vorgesehen sein. Diese erhöhen ebenfalls den Widerstand gegen ein selbsttätiges Lösen der Bohrschraube im eingeschraubten Zustand.

Gemäß einer bevorzugten Ausführungsform ist vorgesehen, dass der Schraubenkopf ein Senkkopf ist. Dies ermöglicht, die Bohrschraube so tief in den Untergrund einzuschrauben, dass der Schraubenkopf bündig abschließt oder sogar versenkt ist, ohne dass vorher vorgebohrt oder angesenkt werden musste.

Die Erfindung wird nachfolgend anhand einer Ausführungsform beschrieben, die in den beigefügten Zeichnungen dargestellt ist. In den Zeichnungen zeigen:
- Figur 1 eine erste perspektivische Darstellung der erfindungsgemäßen Bohrschraube;
- Figur 2 eine zweite perspektivische Darstellung der Bohrschraube von Figur 1;
- Figur 3 die Bohrschraube der Figuren 1 und 2 in einer ersten Seitenansicht;
- Figur 4 die Bohrschraube der Figuren 1 und 2 in einer zweiten Seitenansicht;
- Figur 5 einen Längsschnitt entlang der Ebene V-V von Figur 4;
- Figur 6 einen Längsschnitt entlang der Ebene VI-VI von Figur 3;
- Figur 7 einen Querschnitt entlang der Ebene VII-VII von Figur 3; und
- Figur 8 einen Querschnitt entlang der Ebene VIII-VIII von Figur 3.

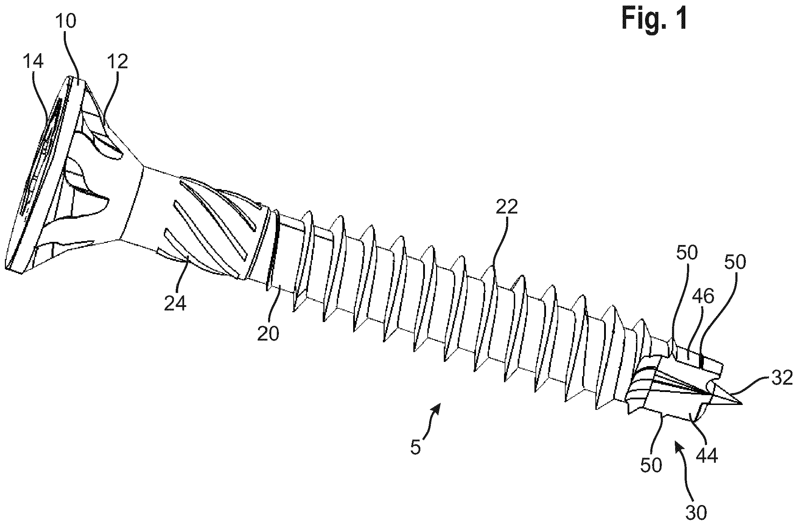

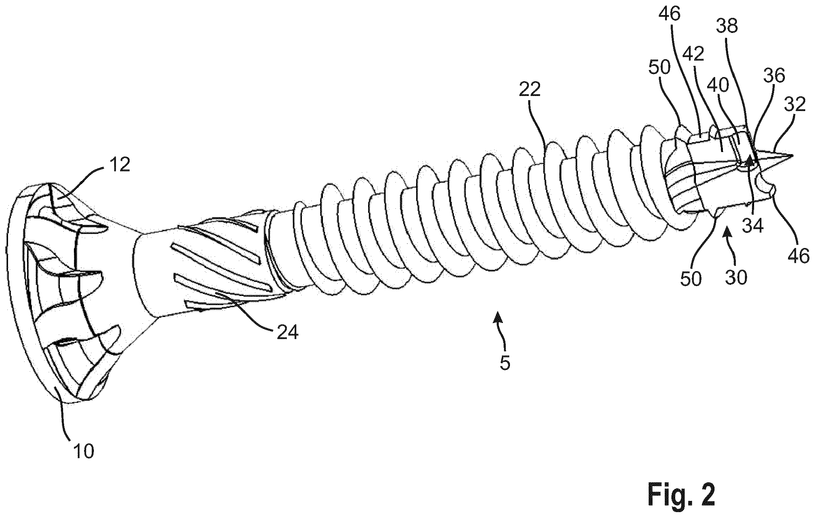

In den Figuren 1 bis 8 ist eine Bohrschraube 5 dargestellt, die einen Schraubenkopf 10, einen Schaft 20 und am vom Schraubenkopf abgewandten, vorderen Ende einen Bohrabschnitt 30 aufweist.

Der Schraubenkopf 10 ist als Senkkopf ausgeführt. Auf seiner konischen, dem Schaft 20 zugewandten Seite ist er mit mehreren Anti-Rückdreh-Taschen 12 versehen.

Zur Drehmomentübertragung von einem Schraubendreher oder einen anderem Werkzeug zum Einschrauben der Bohrschraube 5 ist der Schraubenkopf 10 mit einer Drehmomentübertragungsgestaltung 14 versehen, die hier als Torx-Profil ausgeführt ist. Es können aber auch andere Gestaltungen verwendet werden, beispielsweise ein Innensechskant, ein Kreuzschlitz, etc.

Der Schaft 20 ist allgemein zylindrisch und weist auf einem Großteil seiner Länge ein Gewinde 22 auf. Das Gewinde 22 endet im Abstand vom Schraubenkopf 10.

Zwischen dem Gewinde 22 und dem Schraubenkopf 10 weist der Schaft 20 mehrere Reibrippen 24 auf. Diese erhöhen den Widerstand gegen ein selbsttätiges, unbeabsichtigtes Lösen der Bohrschraube 5.

Das Gewinde 22 ist hier mit einem sehr spitzen Flankenwinkel ausgeführt, so dass das Einschneiden in einen Untergrund erleichtert ist.

Weiterhin ist vorgesehen, dass das Gewinde 22 eingängig ist.

Der Bohrabschnitt 30 setzt den Schaft 20 von vorne hin fort, unterscheidet sich vom Schaft 20 jedoch durch seinen Querschnitt. Vereinfacht ausgedrückt kann der Bohrabschnitt 30 als abgeflachter, zusammengedrückter Teil des Schafts 20 verstanden werden.

Die Breite des Bohrabschnittes 30 entspricht in etwa dem Durchmesser des Schafts 20, wobei sich der Bohrabschnitt 30 nach vorne hin verjüngt.

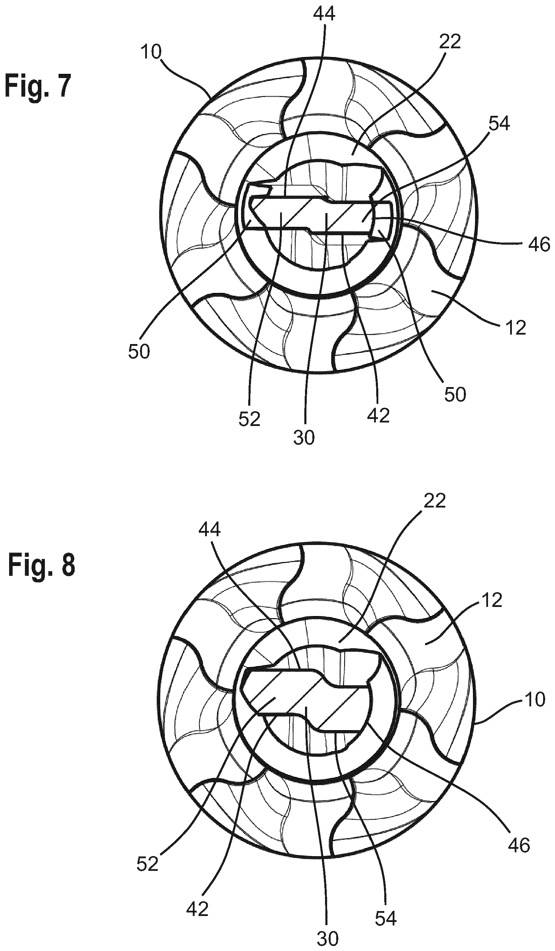

Die Dicke des Bohrabschnittes 30 ist gegenüber dem Durchmesser des Schaftes 20 merklich verringert. Im Bereich des Übergangs zwischen Schaft 20 und Bohrabschnitt 30 hat der Bohrabschnitt eine Dicke, die etwa dem halben Durchmesser des Schaftes 20 entspricht. Nach vorne hin nimmt die Dicke des Bohrabschnittes 30 weiter ab (vergleiche die Figuren 7 und 8).

An seinem vorderen, vom Schraubenkopf 10 angewandten Ende weist der Bohrabschnitt 30 eine Zentrierspitze 32 auf, die als spitze, vierseitige Pyramide ausgeführt ist. Die Zentrierspitze 32 teilt die Stirnseite des Bohrabschnittes 30 in zwei Bereiche.

Der eine dieser beiden Bereiche ist als Schneide 34 ausgeführt, die sich hier etwa senkrecht zur Mittelachse der Bohrschraube 5 erstreckt. Die Schneide 34 weist eine Schneidkante 36, eine in der Einschraubrichtung dahinterliegende Freifläche 38 und eine Spanfläche 40 auf.

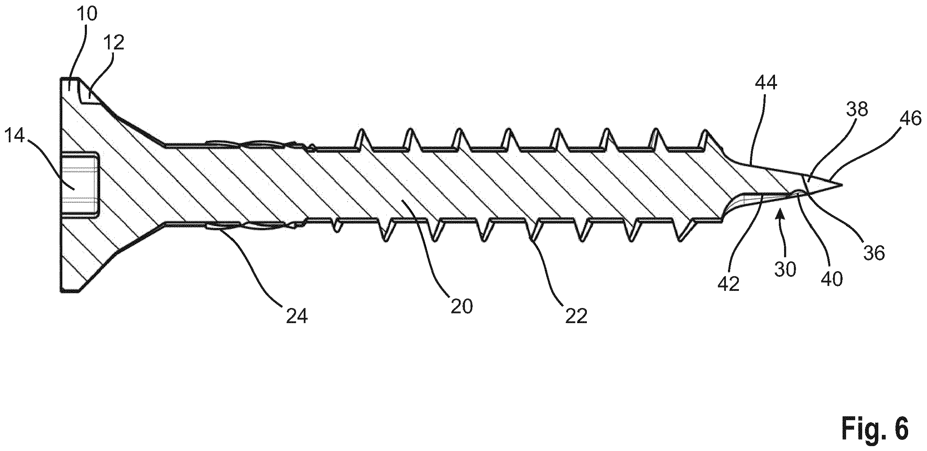

Die Spanfläche 40 ist hier als gekrümmte Nut ausgebildet, die auf ihrer von der Schneidkante 36 abgewandten Seite in eine von zwei großen Seitenflächen 42, 44 des Bohrabschnittes 30 übergeht, hier in die Seitenfläche 42. Die Seitenfläche 42 erstreckt sich dabei etwa parallel zur Mittelachse der Bohrschraube 5 (siehe Figur 6).

Die Freifläche 38 geht auf ihrer von der Schneidkante 36 abgewandten Seite in die andere Seitenfläche 44 über. Die Seitenfläche 44 erstreckt sich schräg zur Mittelachse der Bohrschraube 5 (siehe ebenfalls Figur 6), wobei der Winkel zwischen der Seitenfläche 44 und der Mittelachse spitz ist. Er kann insbesondere in der Größenordnung von 10° bis 30° liegen.

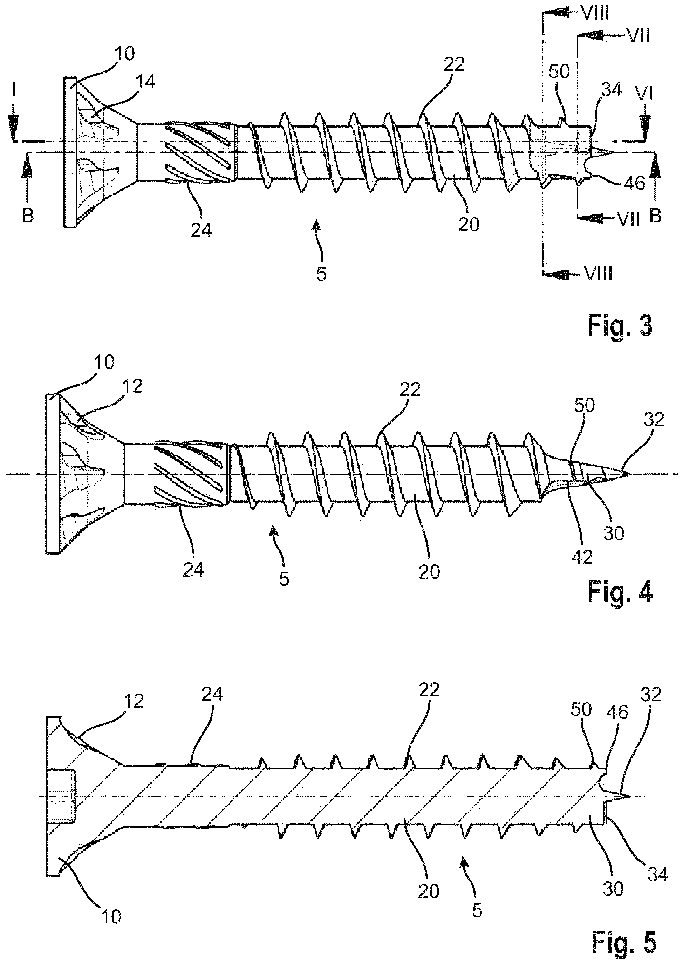

Der auf der anderen Seite der Zentrierspitze 32 liegende Bereich der Stirnseite des Bohrabschnittes weist eine Führungsrippe 46 auf, die am radial äußeren Ende des Bohrabschnittes angeordnet ist. Der Bereich zwischen der Führungsrippe 46 und den Zentrierspitze 32 ist in axialer Richtung gegenüber der Führungsrippe 46 zurückgenommen. Wie in Figur 5 zu sehen ist, geht die der Führungsrippe 46 zugewandte Seitenfläche der pyramidenförmigen Zentrierspitze 32 übergangslos in den zurückgenommenen Bereich über, der in einer durchgehenden Krümmung zur Führungsrippe 46 verläuft.

Die Führungsrippe ist in Umfangsrichtung gekrümmt ausgeführt, wobei der Krümmungsmittelpunkt mit der Mittelachse der Bohrschraube 5 zusammenfällt.

Zwischen den radial außenliegenden Kanten der beiden großen Seitenflächen 42, 44 des Bohrabschnittes 30 befinden sich zwei kleine Seitenflächen 48, die annähernd als Teil einer Zylinderfläche ausgeführt sind, deren Mittelachse mit der Mittelachse der Bohrschraube 5 zusammenfällt. Die großen Seitenflächen 42, 44 sind hingegen im weitesten Sinne eben.

Auf den kleinen Seitenflächen 48 sind Gewindegangabschnitte 50 angeordnet, die als Fortsetzung des Gewindes 22 des Schafts 20 angesehen werden können. Die Höhe der Gewindegangabschnitte 50 verringert sich zur Spitze der Bohrschraube 5 hin, so dass das von den Gewindegangabschnitten 50 definierte Gewinde (und damit das Gewinde 22) zur Spitze der Bohrschraube 5 hin ausläuft.

Wie insbesondere in den Figuren 1, 2, 4 und 6 zu sehen ist, gehen die Seitenflächen 42, 44 annähernd übergangslos in zwei der Seitenflächen der pyramidenförmigen Zentrierspitze 32 über.

Die Figuren 7 und 8 zeigen, dass der Bohrabschnitt 30, im Querschnitt betrachtet, zwei gegeneinander versetzte Bereiche 52, 54 aufweist. Jede der großen Seitenflächen 42, 44 ist also nicht durchgehend eben, sondern weist in der Mitte einen Ebenensprung auf.

Die beiden Bereiche 52, 54 des Querschnitts des Bohrabschnittes 30 überlappen einander in der Mitte so, dass ein verdickter Mittelabschnitt gebildet ist. Dieser ist vorteilhaft für die Stabilität des Bohrabschnittes bei Belastungen in Querrichtung.

Die Bohrschraube 5 besteht aus Metall. Besonders geeignet ist ein Werkstoff SAE 1022/410.

Der Bohrabschnitt 30 mit Zentrierspitze 32 und Schneide 34 wird durch plastisches Umformen des vorderen Abschnittes eines Schraubenrohlings erhalten. Dies kann insbesondere durch Schlagen oder Prägen erfolgen. Der umzuformende Abschnitt des Schraubenrohlings muss dabei genügend Material haben, so dass die Geometrie des Bohrabschnittes 30 erhalten wird. Die Schneide 34 mit der Schneidkante 36 muss nicht nachbearbeitet werden.

Beim Einschrauben der Bohrschraube 5 wird diese mit einer gewissen Andruckkraft gegen den Untergrund gedrückt, in den sie eingeschraubt werden soll (beispielsweise Holz oder Kunststoff). Dabei drückt sich die Zentrierspitze, da sie sehr spitz ausgeführt ist, problemlos so weit in den Untergrund ein, dass die Schneidkante 36 und die Führungsrippe 46 auf dem Material des Untergrundes anliegen.

Sofort zu Beginn der Drehbewegung der Bohrschraube 5 schneidet die Schneidkante 36 Material vom Untergrund weg, so dass eine Bohrung erzeugt wird, die es der Bohrschraube ermöglicht, weiter in den Untergrund einzudringen. Die Zentrierspitze 32 zusammen mit der Führungsrippe 46 gewährleistet, dass die Bohrschraube 5 nicht seitlich wandert, auch wenn sie noch nicht tief in den Untergrund eingeschraubt ist.

Aufgrund des abgeflachten Querschnitts des Bohrabschnittes 30 (und auch der Ausrichtung der Seitenfläche 42 annähernd parallel zur Längsachse der Bohrschraube 5) können die Späne, die von der Schneide 34 erzeugt werden, gut nach hinten, also zum Schaft hin, aus dem Bohrloch abgeführt werden, so dass sie das Bohren nicht behindern.

Sobald die Bohrschraube ein wenig in den Untergrund eingeschraubt ist, greifen die Gewindegangabschnitte 50 in das Material des Untergrunds und erzeugen einen Vorschub, der das Einschrauben unterstützt und die dabei notwendige Andruckkraft niedrig hält.

## Patentansprüche

1. Bohrschraube (5) mit einem Schraubenkopf (10) und einem Schaft (20), der mit einem Gewinde (22) versehen ist, wobei am vom Schraubenkopf (10) abgewandten Ende des Schafts (20) ein Bohrabschnitt (30) angeordnet ist, der mit einer Schneide (34) und mit Gewindegangabschnitten (50) versehen ist, und am vom Schraubenkopf (10) abgewandten Ende des Bohrabschnitts (30) eine Zentrierspritze (32) vorgesehen ist, **dadurch gekennzeichnet, dass** angrenzend an die Schneide (34) eine Spannut (40) vorgesehen ist und dass sich die Schneide (34) nur auf einer Seite der Mittelachse der Bohrschraube (5) befindet.

2. Bohrschraube (5) nach Anspruch 1, **dadurch gekennzeichnet, dass** die Schneide (34) sich in einem Winkel zwischen 70° und 110° relativ zur Mittelachse der Bohrschraube (5) erstreckt, vorzugsweise in einem Winkel von etwa 90°.

3. Bohrschraube (5) nach Anspruch 1 oder 2, **dadurch gekennzeichnet, dass** auf der von der Schneide (34) abgewandten Seite der Mittelachse eine Führungsrippe (46) angeordnet ist.

4. Bohrschraube (5) nach Anspruch 3, **dadurch gekennzeichnet, dass** die Führungsrippe (46), in axialer Richtung betrachtet, etwa auf dem Niveau der Schneide (34) endet.

5. Bohrschraube (5) nach einem der vorhergehenden Ansprüche, **dadurch gekennzeichnet, dass** der Bohrabschnitt (30) einen allgemein rechteckigen Querschnitt hat, insbesondere seine Dicke mehr als doppelt so groß ist wie seine Breite.

6. Bohrschraube (5) nach einem der vorhergehenden Ansprüche, **dadurch gekennzeichnet, dass** die Gewindegangabschnitte (50) hinsichtlich Abstand voneinander und Steigung als Fortsetzung des Gewindes (22) des Schafts (20) ausgeführt sind.

7. Bohrschraube (5) nach einem der vorhergehenden Ansprüche, **dadurch gekennzeichnet, dass** der Querschnitt des Bohrabschnitts (30) sich ausgehend von der Zentrierspitze (32) zum Schaft (20) hin vergrößert.

8. Bohrschraube (5) nach einem der vorhergehenden Ansprüche, **dadurch gekennzeichnet, dass** der Bohrabschnitt (30), im Querschnitt betrachtet, zwei gegeneinander versetzte Bereiche (52, 54) aufweist, die einander in der Mitte so überlappen, dass ein verdickter Mittelabschnitt gebildet ist.

9. Bohrschraube (5) nach einem der vorhergehenden Ansprüche, **dadurch gekennzeichnet, dass** das Gewinde (22) einen einzigen Gang aufweist.

10. Bohrschraube (5) nach einem der vorhergehenden Ansprüche, **dadurch gekennzeichnet, dass** der Bohrabschnitt (30) aus einen plastisch verformten Materialabschnitt gebildet ist.

11. Bohrschraube (5) nach einem der vorhergehenden Ansprüche, **dadurch gekennzeichnet, dass** der Bohrabschnitt (30) geprägt ist.

12. Bohrschraube (5) nach einem der vorhergehenden Ansprüche, dass das Gewinde (22) gerollt ist.

13. Bohrschraube (5) nach einem der vorhergehenden Ansprüche, dass der Schaft (20) mit Reibrippen (24) versehen ist.

14. Bohrschraube (5) nach einem der vorhergehenden Ansprüche, dass die Zentrierspitze (32) zwei einander gegenüberliegende Flanken aufweist, die in den Bohrabschnitt (30) übergehen.

15. Bohrschraube (5) nach einem der vorhergehenden Ansprüche, dass der Schraubenkopf (10) ein Senkkopf ist.

16. Bohrschraube (5) nach einem der vorhergehenden Ansprüche, dass am Schraubenkopf (10) mehrere Anti-Rückdreh-Taschen (12) vorgesehen sind.

## Claims

1. A self-drilling screw (5) comprising a screw head (10) and a shank (20) provided with a thread (22), a drilling section (30) being arranged at the end of the shank (20) facing away from the screw head (10) and being provided with a cutting edge (34) and with thread flight sections (50), and a centering tip (32) being provided at the end of the drilling section (30) facing away from the screw head (10), **characterized in that** a chip flute (40) is provided adjacent to the cutting edge (34), and **in that** the cutting edge (34) is disposed only on one side of the central axis of the self-drilling screw (5).

2. The self-drilling screw (5) according to claim 1, **characterized in that** the cutting edge (34) extends at an angle between 70° and 110° relative to the central axis of the self-drilling screw (5), preferably at an angle of about 90°.

3. The self-drilling screw (5) according to claim 1 or 2, **characterized in that** a guide rib (46) is arranged on the side of the central axis facing away from the cutting edge (34).

4. The self-drilling screw (5) according to claim 3, **characterized in that** the guide rib (46), viewed in the axial direction, ends approximately at the level of the cutting edge (34).

5. The self-drilling screw (5) according to any of the preceding claims, **characterized in that** the drilling section (30) has a generally rectangular cross-section, in particular that its thickness is more than twice as large as its width.

6. The self-drilling screw (5) according to any of the preceding claims, **characterized in that** the thread flight sections (50), with regard to their distance from each other and their pitch, are configured as a continuation of the thread (22) of the shank (20).

7. The self-drilling screw (5) according to any of the preceding claims, **characterized in that** the cross-section of the drilling section (30) increases starting from the centering tip (32) towards the shank (20).

8. The self-drilling screw (5) according to any of the preceding claims, **characterized in that**, viewed in cross-section, the drilling section (30) includes two mutually offset portions (52, 54) which overlap each other in the middle such that a thickened middle section is formed.

9. The self-drilling screw (5) according to any of the preceding claims, **characterized in that** the thread (22) has one single flight.

10. The self-drilling screw (5) according to any of the preceding claims, **characterized in that** the drilling section (30) is formed from a plastically deformed material section.

11. The self-drilling screw (5) according to any of the preceding claims, **characterized in that** the drilling section (30) is stamped.

12. The self-drilling screw (5) according to any of the preceding claims, **characterized in that** the thread (22) is rolled.

13. The self-drilling screw (5) according to any of the preceding claims, **characterized in that** the shank (20) is provided with friction ribs (24).

14. The self-drilling screw (5) according to any of the preceding claims, **characterized in that** the centering tip (32) has two flanks opposite each other, which continue into the drilling section (30).

15. The self-drilling screw (5) according to any of the preceding claims, **characterized in that** the screw head (10) is a countersunk head.

16. The self-drilling screw (5) according to any of the preceding claims, **characterized in that** the screw head (10) has a plurality of anti-reverse rotation pockets (12) provided thereon.

## Revendications

1. Vis autoperceuse (5), présentant une tête de vis (10) et une tige (20) qui est pourvue d'un filet (22), un tronçon de perçage (30) pourvu d'un bord tranchant (34) et de tronçons de pas de vis (50) étant agencé à l'extrémité de la tige (20) qui est détournée de la tête de vis (10), et une pointe de centrage (32) étant prévue à l'extrémité du tronçon de perçage (30) qui est détournée de la tête de vis (10), **caractérisée en ce qu'**une rainure à copeaux (40) est prévue adjacente au bord tranchant (34), et **en ce que** le bord tranchant (34) se situe uniquement d'un côté de l'axe médian de la vis autoperceuse (5).

2. Vis autoperceuse (5) selon la revendication 1, **caractérisée en ce que** le bord tranchant (34) s'étend selon un angle compris entre 70° et 110° par rapport à l'axe médian de la vis autoperceuse (5), de préférence selon un angle d'environ 90°.

3. Vis autoperceuse (5) selon la revendication 1 ou 2, **caractérisée en ce qu'**une nervure de guidage (46) est agencée du côté de l'axe médian qui est détourné du bord tranchant (34).

4. Vis autoperceuse (5) selon la revendication 3, **caractérisée en ce que** la nervure de guidage (46), vue dans le sens axial, se termine environ au niveau du bord tranchant (34).

5. Vis autoperceuse (5) selon l'une des revendications précédentes, **caractérisée en ce que** le tronçon de perçage (30) présente une section transversale généralement rectangulaire, en particulier **en ce que** son épaisseur correspond à plus du double de sa largeur.

6. Vis autoperceuse (5) selon l'une des revendications précédentes, **caractérisée en ce que** les tronçons de pas de vis (50) sont réalisés sous forme de prolongement du filet (22) de la tige (20) concernant la distance les uns des autres et le pas.

7. Vis autoperceuse (5) selon l'une des revendications précédentes, **caractérisée en ce que** la section transversale du tronçon de perçage (30) augmente depuis la pointe de centrage (32) vers la tige (20).

8. Vis autoperceuse (5) selon l'une des revendications précédentes, **caractérisée en ce que** le tronçon de perçage (30), vu en section transversale, présente deux zones (52, 54) qui sont décalées l'une par rapport à l'autre et qui se chevauchent au centre de manière à former un tronçon médian épaissi.

9. Vis autoperceuse (5) selon l'une des revendications précédentes, **caractérisée en ce que** le filet (22) ne présente qu'un seul pas de vis.

10. Vis autoperceuse (5) selon l'une des revendications précédentes, **caractérisée en ce que** le tronçon de perçage (30) est réalisé à partir d'un tronçon de matière déformé plastiquement.

11. Vis autoperceuse (5) selon l'une des revendications précédentes, **caractérisée en ce que** le tronçon der perçage (30) est estampé.

12. Vis autoperceuse (5) selon l'une des revendications précédentes, **caractérisée en ce que** le filet (22) est enroulé.

13. Vis autoperceuse (5) selon l'une des revendications précédentes, **caractérisée en ce que** la tige (20) est pourvue de nervures de friction (24).

14. Vis autoperceuse (5) selon l'une des revendications précédentes, **caractérisée en ce que** la pointe de centrage (32) présente deux flancs opposés l'un à l'autre qui se fondent dans le tronçon de perçage (30).

15. Vis autoperceuse (5) selon l'une des revendications précédentes, **caractérisée en ce que** la tête de vis (10) est une tête fraisée.

16. Vis autoperceuse (5) selon l'une des revendications précédentes, **caractérisée en ce que** plusieurs poches de blocage de rotation inverse (12) sont prévues sur la tête de vis (10).
